Europäisches Patentamt

European Patent Office

Office européen des brevets

(11) Publication number: **0 246 181**
A1

# (12) EUROPEAN PATENT APPLICATION

(21) Application number: 87730054.1

(22) Date of filing: 12.05.87

(51) Int. Cl.³: **C 04 B 18/14**
C 04 B 20/02, C 04 B 28/04
B 01 F 17/00
//(C04B28/04, 18:14, 24:12,
24:16), (C04B28/04, 18:14, 24:12,
24:26)

(30) Priority: 13.05.86 US 862849

(43) Date of publication of application:
19.11.87 Bulletin 87/47

(84) Designated Contracting States:
AT BE CH DE ES FR GB GR IT LI LU NL SE

(71) Applicant: W.R. GRACE & CO.
Grace Plaza 1114 Avenue of the Americas
New York New York 10036(US)

(72) Inventor: Scheiner, Paul C..
38 Concord Street
Maynard Massachusetts 01754(US)

(74) Representative: UEXKÜLL & STOLBERG Patentanwälte
Beselerstrasse 4
D-2000 Hamburg 52(DE)

(54) Microsilica slurries and method of preparation.

(57) Microsilica slurries having a microsilica solids content of at least about 50% by weight which are stable for extended periods of time are provided. The slurries have a pH in the range of about 5.0 to 8.5 and comprise microsilica, an aqueous carrier medium, an anionic dispersant for the microsilica, and a chelating agent capable of chelating multivalent cationic impurities in the microsilica. Also provided are a method of preparing the slurries and hydraulic cement compositions containing same.

EP 0 246 181 A1

## MICROSILICA SLURRIES AND METHOD OF PREPARATION

### BACKGROUND OF THE INVENTION

This invention relates to microsilica slurries and to a method of preparing same. More specifically, this invention relates to stable, aqueous microsilica slurries which contain high concentrations of microsilica and to a method of preparing such slurries.

As used herein, the term "microsilica" refers to particulate, amorphous, pozzolanic silicon dioxide. The microsilica particles are very fine microspheres typically having an average diameter of less than one micron. The preferred microsilica is condensed silica fume which is obtained as a by-product in the production of silicon metal, ferrosilicons, or other types of silicon alloys in electric reduction furnaces. Condensed silica fume usually contains at least 65% by weight of silicon dioxide. Preferably, for purposes of this invention, the condensed silica fume consists of at least 85% by weight of silicon dioxide. For a detailed discussion of condensed silica fume, its production, chemical composition, and uses, reference is made to the brochure entitled "Condensed Silica Fume", published in 1983 by the University of Sherbrooke, Sherbrooke (Quebec) Canada.

It is known to employ microsilica as a strength-enhancing additive in hydraulic cement, concretes, grouts, and the like. The microsilica functions as a pozzolanic reagent, reacting with lime present in the cement composition to provide improved properties. In particular, the compressive strength, density, and impermeability of the set composition may be increased substantially by the addition of microsilica.

1

For large-scale commercial utilization in the concrete industry, it is necessary to provide microsilica in a safe, easily handled form which is transportable, e.g. by pumping, and can be conveniently dispensed in the making of concrete slurries. These requirements are most readily met by provision of the microsilica in an aqueous slurry form, i.e., dispersed or suspended in an aqueous-based carrier medium. Such slurries eliminate dust and may be conveniently transported and dispensed for purposes of preparing concrete mixtures.

To minimize shipment and storage costs, it is desirable to use microsilica slurries having a high solids concentration, i.e., containing at least 50% by weight of microsilica particles. In addition to the foregoing cost considerations, such high concentrations advantageously minimize the slurry volume required for a given application, thereby resulting in minimal alteration of the concrete mix parameters.

It is well known that microsilica slurries can gel on standing and that the tendency to gel increases with increasing microsilica particle concentration. In particular, at microsilica concentrations in the range of 50% or greater, it has proven difficult to prepare non-gelling slurries, and especially difficult with microsilica by-product materials of lesser purity. Since usage in the concrete industry generally entails shipment and storage, typically exceeding several weeks, gellation is of particular concern. It has, therefore, been desired to prepare high concentration microsilica slurries which are stable for at least the typical shipment and storage times encountered in the use of the slurry as a concrete admixture.

2

The present invention is accordingly directed to aqueous-based microsilica slurries which have a solids content in excess of 50% by weight, and are stable for extended periods of time. The stability of the microsilica slurries of this invention is such that the slurries do not gel, or only undergo minimal gellation which can be reversed by agitation, for at least the typical shipment and storage times encountered in commercial use as concrete admixtures. Accordingly, the slurries of this invention possess such stability for at least about two weeks after preparation and typically possess such stability for at least about 30 days.

In accordance with the invention, it has been found that these stable microsilica slurries can be prepared by incorporating into the high solids content slurry an anionic dispersant for the microsilica and a chelating agent capable of chelating multivalent cationic impurities in the microsilica and, further, by controlling the pH of the slurry to within the range of about 5.0 to 8.5.

The present invention is further directed to a method of preparing the stable microsilica slurries which comprises providing an aqueous medium, adding the anionic dispersant and chelating agent to the aqueous medium, adjusting the pH of the aqueous medium such that after the addition of microsilica the pH of the aqueous medium will be at least about 5.0, adding the microsilica solids after the pH adjustment, and thereafter adjusting the pH downward, if necessary, to within the range of 5.0 to 8.5. The method of the invention advantageously avoids exposure of the microsilica to localized areas of high pH, and thus has been found to avoid localized gelling of the microsilica. This permits the utilization of low shear mixers to prepare the high concentration slurries, offering advantages in terms of equipment cost and maintenance.

The present invention is also directed to hydraulic cement compositions containing the inventive microsilica slurries.

3

## DETAILED DESCRIPTION OF THE INVENTION

In accordance with the invention, it has been found that optimal stabilization of high solids microsilica slurries, as defined above, can be achieved by incorporating into the slurry an anionic microsilica dispersant and a chelating agent capable of chelating one or more of the multivalent cationic impurities in the microsilica, and by controlling the pH of the slurry to within the range of about 5.0 to 8.5. The stabilization attained in accordance with the invention permits the preparation of stable slurries of a relatively wide variety of microsilicas. Thus, in addition to the relatively pure microsilicas, such as the condensed silica fume by-product of silicon metal production (the so-called "100% silica fume"), the less pure microsilicas, such as the condensed silica fume by-product of 75% ferrosilicon production, may also be used in the slurries of this invention.

Condensed silica fumes contain varying amounts of multivalent cationic impurities, e.g., iron, aluminum, calcium, zinc, and magnesium. According to this invention, a chelating agent is included in the slurry which is capable of chelating at least one of the multivalent cationic impurities in the microsilica. Most preferably, the chelating agent is capable of complexing a multiplicity of the multivalent cationic impurities. The complexation of multivalent cationic impurities which is attained has been found to be an essential factor in obtaining optimal stabilization of the slurry.

Chelating agents for multivalent cations are of course well known. Among the chelating agents which may be used in this invention are aminocarboxylic acids, e.g., ethylenediaminetetraacetic acid (EDTA); 1,3-diketones, e.g., acetylacetone; hydroxycarboxylic acids, e.g.,

citric acid, tartaric acid; borate esters of hydroxycarboxylic acids and their salts, e.g., borogluconic acid, calcium borogluconate; polyamines, e.g. ethylenediamine; oximes, e.g. dimethylglyoxime; polyphosphonic acids, e.g., ethylenediaminetetra(methylenephosphonic acid) and hexylenediamine(methylenephosphonic acid) and polyphosphates. The aminocarboxylic acids - especially EDTA - and polyphosphonic acids are preferred for use in the invention. A combination of two or more chelating agents may be used in this invention.

The amount of chelating agent which will provide a stable slurry depends on the type of microsilica, the type and amount of multivalent cationic impurities in the microsilica, the type and amount of dispersant present in the slurry, and the pH of the slurry. At least about 0.01% percent by weight of chelating agent, based on the weight of microsilica, is normally used. A generally useful weight concentration range is about 0.01% to 3.0%, based on the weight of microsilica. Slurries of satisfactory stability may be obtained with the lower amounts of chelating agent, e.g., 0.01% to 0.05%, where the pH is in the range of about 5.0 to 6.5. At higher pH levels, greater amounts of chelating agent are normally used. At a pH above about 6.5, for example, at least about 0.05% by weight of chelating agent is used. Amounts of at least about 0.1% by weight are usually preferred where the pH is above about 7.5.

Dispersants are commonly defined as that class of materials that are capable of bringing fine solids into a state of suspension so as to inhibit or prevent their agglomerating or settling in a fluid medium. Any anionic material which is capable of acting in this manner on microsilica may be used in this invention. Anionic dispersants suitable for use in this invention include lignosulfonic acid salts; arylsulfonic

acid-formaldehyde condensate polymers and their salts, e.g., sodium of potassium neutralized naphthalene-sulfonic acid-formaldehyde condensate; and polymers of ethylenically polymerizable carboxylic acids and salts thereof, e.g., homopolymers and copolymers of acrylic acid and methacrylic acid and partially or completely neutralized salts thereof. Preferred dispersants are the neutralized naphthalene sulfonate-formaldehyde condensate polymers.

As with the chelating agent, the amount of dispersant which will provide a stable slurry of the invention depends on the type of microsilica, the pH of the slurry, and the type and amount of chelating agent. At least about 0.005% by weight of dispersant, based on the weight of microsilica, is normally used. There is generally no limit on the amount of dispersant which may be used, and, indeed, excess amounts of dispersant beyond what is required for optimum stability of the slurry may be beneficially used as concrete additives. For example, such excess amounts of dispersant may facilitate the mixing of the microsilica slurry into a concrete slurry so as to more readily achieve a uniform distribution of the microsilica and, in addition, may function as a cement dispersant or water reducing agent. For most applications, however, an amount of about 3% by weight of dispersant provides a practical and economical upper limit and satisfactory stability is generally achieved with amounts of less than 2% by weight. As with the chelates, the lower levels of dispersant are most suitably used at the lower end of the pH range. Thus, about 0.005% to 0.05% by weight of dispersant may be suitably employed at a pH of about 5.0 to 7.0, provided that this is accompanied by use of a sufficient amount of chelating agent. At pH levels of about 7.0 to 8.5, dispersant amounts greater than about 0.05% are preferred. A particularly preferred combination for pH levels of 7.0 or greater is about 0.1% by weight of both the chelating agent and dispersant.

6

From the foregoing description it should be apparent that the lower pH levels, e.g., about 5.0 to 6.5, may be preferred insofar as stable slurries can be prepared with minimized amounts of both chelating agent and dispersant. However, an acidic pH presents the drawback of corrosion potential in metal storage tanks. Moreover, it is preferred to employ higher pH slurries as hydraulic cement admixtures since this minimizes the pH alteration of the normally high pH cement slurries. Accordingly, a pH of about 7.0 or greater is often preferred, notwithstanding the greater tendency of the slurry to gel. Thus, at this higher pH level, the combination of chelating agent and dispersant, particularly at the preferred concentration of at least 0.1% by weight of each, is especially beneficial and desirable for providing stable slurries intended for use as hydraulic cement admixture.

Reference herein to the pH of microsilica slurries relates to the pH of the slurry at the time of preparation. The pH may be adjusted by addition of acid or base and the common mineral acids and organic acids and alkali metal hydroxides are normally used. In accordance with the method aspect of this invention, pH adjustment with base is accomplished prior to addition of the microsilica to the aqueous medium. Suitable pH adjustment may be determined empirically through relatively simple trial and error experimentation.

According to the method of this invention, stable microsilica slurries are prepared by providing an aqueous medium, mixing an anionic dispersant and a chelating agent into the aqueous medium in the amounts desired for stabilization of the slurry, adjusting the pH of the aqueous medium such that after addition of microsilica the pH will be at least about 5.0, adding microsilica solids to the aqueous medium, and, if necessary after addition of the microsilica, adjusting the pH

7

downward to within the range of about 5.0 to 8.5. The pH of the aqueous medium prior to the addition of microsilica can be adjusted before or after the addition of the dispersant or chelating agent.

Any suitable mixing means may be used to disperse the microsilica solids. As previously noted, the avoidance of localized areas of high pH via pre-adjustment of pH prior to microsilica addition avoids localized gelling and thus allows of the use of low shear mixers. These mixers are preferred in that they are generally less expensive than high shear mixers, have less critical tolerances, and are easier to maintain.

The aqueous medium used as a carrier for the solids is generally 100% water. If desired, water miscible liquids such as alcohols may be admixed with the water.

The present invention is further described and illustrated by the following examples. In the examples, microsilica weight percentages are based on the weight of the slurry and chelating agent and dispersant weight percentages are based on the weight of microsilica.

## EXAMPLE 1

To 100 ml. of water were added 0.75 g. of EDTA and 3.61 g. of a 41.4% aqueous solution of a neutralized naphthalenesulfonate-formaldehyde condensate of W. R. Grace and Co. sold under the trademark WRDA-19. 10.6 ml. of a 0.1 N. sodium hydroxide solution were added bringing the pH to 11.4. 150 g. of condensed silica fume obtained from Reynolds Metals Co. were added with low shear mixing. Afer a few minutes of continuous mixing, a uniform slurry of the silica fume was obtained having a pH of 6.6. The slurry had a measured viscosity of 50 centipoise one day after preparation and 110 centipoise seven days after preparation (Brookfield rotoviscometer, 30 rpm spindle speed, #3 spindle).

EXAMPLE 2

A series of microsilica slurries of the invention was prepared containing 60% by weight microsilica, 1% by weight of neutralized naphthalenesulfonate-formaldehyde condensate polymer (WRDA-19) and the following chelates, which were used at the "low" weight percentage A and "high" weight percentage B given below:

| Chelate | Weight Percentage A | Weight Percentage B |
|---|---|---|
| EDTA | 0.1 | 1.0 |
| Citric Acid | 0.088 | 0.88 |
| Dequest 2041* | 0.12 | 1.2 |

*Ethylenediaminetetra (methylenephosphoric acid) of Monsanto Co.

The weight percentage of each chelate was chosen to provide approximately equivalent amounts of chelation sites.

The slurries were prepared by adding the WRDA-19 and chelate to water, adjusting the pH by addition of base such that a pH of about 6.5 to 7.0 resulted upon addition of microsilica, and adding the microsilica with low shear mixing to obtain a uniform slurry. The adjusted pH prior to microsilica addition varied from about 9.5 to 12, depending on the chelating agent and the amount which was used.

For comparison with these slurries, a further series of 60% microsilica slurries was prepared containing microsilica alone, microsilica and the high and low weight perecentages of chelate, and microsilica and 1.0% WRDA-19.

The microsilica was condensed silica fume ("CSF") obtained from Elkem Chemicals, Inc., Pittsburgh, PA.

As a measure of the fluidity and stability of the slurries, viscosity measurements were taken at about 24 hrs. and 7 days after preparation. The measurements were taken at room temperature using a Brookfield rotoviscometer. The measured centipoise viscosities at 30 rpm spindle speed with a #3 spindle are given in Table 1.

10

TABLE 1

| Slurry Formulation | Chelate | | | | | |
|---|---|---|---|---|---|---|
| | EDTA | | Citric Acid | | Dequest 2041 | |
| | 1 day | 7 day | 1 day | 7 day | 1 day | 7 day |
| CSF | 3610 | 2690 | 4000 | 4000 | 1200 | 2160 |
| CSF Chelate Wt.% A | 2020 | 1400 | 1340 | 2030 | 1490 | 680 |
| CSF Chelate Wt.% B | 580 | 340 | 890 | 330 | 710 | 410 |
| CSF WRDA-19 | 810 | 520 | 1030 | 550 | 1120 | 420 |
| CSF Chelate Wt.% A WRDA-19 | 380 | 420 | 680 | 620 | 600 | 420 |
| CSF Chelate Wt.% B WRDA-19 | 370 | 350 | 460 | 360 | 310 | 420 |

se 2923

The measured viscosities of Table 1 are indicative of the tendency of the microsilica slurries to gel. As a general rule, those slurries having a viscosity of less than about 500 centipoise had satisfactory stabilities. Thus, the tendency of these slurries to gel was relatively small, such that the slurries remained fluid or gelled only to a minimal extent and could be converted back to a fluid state by agitation. Generally, the slurries having a measured viscosity of less than 500 centipoise after 7 days had maintained approximately the same viscosity, and thus the same fluid or minimally gelled state, at 30 days total aging time. The more preferred slurries in this and the following examples were those having a measured viscosity of less than about 300 centipoise at 7 days after preparation.

## EXAMPLE 3

A series of slurries was prepared identically as described in Example 2 using a condensed silica fume supplied by Reynolds Metals Co. Viscosity measurements made as in Example 2 are given in Table 2.

## EXAMPLE 4

A series of 60% microsilica slurries of this invention was prepared by the procedure described in Example 2, using the pre-adjustment of pH to bring the pH of the prepared slurry to about 6.5 - 7.0. The slurries contained 0.5% by weight of EDTA and the following dispersants, which were used at the respective "low" and "high" weight percentages C and D:

| Dispersant | Weight Percentage C | Weight Percentage D |
|---|---|---|
| Sodium Lignosulfonate | 0.01 | 1.0 |
| Daxad-16* | 0.1 | 1.0 |
| Sodium Polyacrylate** | 0.01 | 0.1 |
| WRDA-19 | 0.1 | 1.0 |

\* Neutralized naphthalene sulfonate condensate polymer sold by W. R. Grace & Co.

\*\* Prepared by sodium hydroxide neutralization of the polyacrylic acid sold under the tradename Colloid 119/50 by Colloids Inc.

13

## TABLE 2

| Slurry Formulation | Chelate | | | | | |
|---|---|---|---|---|---|---|
| | EDTA | | Citric Acid | | Dequest 2041 | |
| | 1 day | 7 day | 1 day | 7 day | 1 day | 7 day |
| CSF | 1450 | 800 | 560 | 600 . | 1080 | 610 |
| CSF Chelate Wt.% A | 400 | 160 | 400 | 410 | 680 | 350 |
| CSF Chelate Wt.%. B | 50 | 60 | 280 | 140 | 100 | 80 |
| CSF WRDA-19 | 210 | 110 | 440 | 130 | 450 | 130 |
| CSF Chelate Wt.% A WRDA-19 | 100 | 100 | 140 | 120 | 270 | 160 |
| CSF Chelate WT.%. B WRDA-19 | 100 | 100 | 60 | 140 | 100 | 40 |

For comparison with these slurries, a further series of 60% microsilica slurries was prepared containing microsilica alone, microsilica and the high and low weight percentages of dispersant, and microsilica and 0.5% by weight of EDTA.

The microsilica was the Elkem condensed silica fume used in Example 2.

Viscosity measurements were taken in the same manner as in Example 2 and are given in Table 3.

### EXAMPLE 5

A series of slurries was prepared identically as described in Example 4 using the Reynolds Metals condensed silica fume of Example 3. Viscosity measurements made as in the previous Examples are given in Table 4.

### EXAMPLE 6

Slurries containing 60% by weight of Reynolds Metals Co. condensed silica fume in water were prepared using EDTA and WRDA-19 in the weight percentage amounts given below:

| Slurry Formulation | EDTA | WRDA-19 |
|---|---|---|
| A | 0.01% | 0.10% |
| B | 0.10% | 0.01% |
| C | 1.00% | 0.10% |
| D | 0.10% | 1.00% |

15

Case 2923

## TABLE 3

| Slurry Formulation | Dispersant | | | | | | | |
|---|---|---|---|---|---|---|---|---|
| | Sodium Lignosulfonate | | Daxad-16 | | Polyacrylic Acid | | WRDA-19 | |
| | 1 Day | 7 Day | 1 Day | 7 Day | 1 Day | 7 Day | 1 Day | 7 Day |
| CSF | 3610 | 2690 | 3660 | 2980 | 3900 | 3320 | 2960 | 4000 |
| CSF Dispersant Wt.% C | 3510 | 2680 | 1460 | 1020 | 1800 | 1940 | 760 | 1060 |
| CSF Dispersant Wt.% D | 960 | 820 | 940 | 780 | 1380 | 880 | 720 | 830 |
| CSF 0.5% EDTA | 810 | 480 | 770 | 560 | 900 | 640 | 620 | 600 |
| CSF Dispersant Wt.% C 0.5% EDTA | 920 | 550 | 450 | 410 | 820 | – | 410 | 440 |
| CSF Dispersant Wt.% D 0.5% EDTA | 580 | 560 | 510 | 440 | 710 | 650 | 300 | 480 |

## TABLE 4

| Slurry Formulation | Dispersant | | | | | | | |
| --- | --- | --- | --- | --- | --- | --- | --- | --- |
| | Sodium Lignosulfonate | | Daxad-16 | | Polyacrylic Acid | | WRDA-19 | |
| | 1 Day | 7 Day | 1 Day | 7 Day | 1 Day | 7 Day | 1 Day | 7 Day |
| CSF | 1450 | 800 | 820 | 560 | 990 | 690 | 740 | 86 |
| CSF Dispersant Wt.% A | 640 | 370 | 500 | 330 | 500 | 510 | 340 | 300 |
| CSF Dispersant Wt.% B | 450 | 280 | 300 | 360 | 310 | – | 280 | 240 |
| CSF 0.5% EDTA | 100 | 60 | 50 | 120 | 190 | 120 | 100 | 70 |
| CSF Dispersant Wt.% A 0.5% EDTA | 90 | 40 | 90 | 120 | 160 | 149 | 80 | 40 |
| CSF Dispersant % B 0.5% EDTA | 190 | 220 | 100 | 150 | 160 | 100 | 140 | 110 |

Two slurries of each of the above formulations were prepared by the method described in Example 2. The pH's were adjusted to provide one slurry at a low pH of approximately 5.7 to 6 and the other at a high pH of approximately 7.3 to 7.8. Viscosity and pH measurements were carried out one day and sixteen days after preparation of the slurries using the Brookfield rotoviscometer. The results obtained at a spindle speed of 30 rpm (# 3 spindle) are given in centipoise in Table 5, together with the corresponding pH.

TABLE 5

| Slurry Formulation | Day 1 | | Day 16 | |
|---|---|---|---|---|
| | pH | Viscosity | pH | Viscosity |
| A | 5.85 | 420 | 6.20 | 350 |
| B | 5.95 | 370 | 6.15 | 260 |
| C | 6.10 | 170 | 5.95 | 260 |
| D | 6.00 | 230 | 6.59 | 220 |
| A | 7.30 | 790 | 7.70 | 890 |
| B | 7.55 | 1990 | 7.85 | 2890 |
| C | 8.20 | 200 | 8.15 | 100 |
| D | 7.70 | 580 | 8.00 | 290 |

The viscosity results in Table 5 illustrate the increased tendency of the slurry to gel with increased pH and show that, at the higher pH, increased levels of dispersant or chelating agent lower the viscosity and can be used to enhance stability.

EXAMPLE 7      0246181

Slurries containing 60% by weight of Reynolds Metals Co. condensed silica fume in water were prepared by the method of Example 2 using EDTA and WRDA-19 in the weight percentage amounts given below:

| Slurry Formulation | EDTA | WRDA-19 |
|---|---|---|
| E | 0.01 | 0.01 |
| F | 1.0 | 0.01 |
| G | 0.01 | 1.0 |
| H | 1.0 | 1.0 |
| I | 0.10 | 0.10 |

The pH was adjusted to provide slurries having a pH about 6.6. Viscosity and pH measurements were carried out one day and fifteen days after preparation of the slurries using the Brookfield rotoviscometer. The results obtained with a #3 spindle at a spindle speed of 30 rpm are given in centipoise in Table 6, together with the pH.

## TABLE 6

| Slurry Formulation | Day 1 | | Day 15 | |
|---|---|---|---|---|
| | pH | Viscosity | pH | Viscosity |
| E | 6.60 | 1680 | 7.00 | 2170 |
| F | 6.60 | 140 | 7.00 | 110 |
| G | 6.61 | 850 | 7.00 | 360 |
| H | 6.50 | 110 | 7.00 | 340 |
| I | 6.55 | 520 | 7.00 | 400 |

The microsilica slurries of this invention are useful as strength enhancing admixtures in hydraulic cement concretes, grouts, mortars, and the like, and, in general, may be used as hydraulic cement admixtures in accordance with known procedures. For example, the microsilica slurries may be added to hydraulic cement slurries in quantities sufficient to provide from about 2% to 50% by weight of microsilica, based on the weight of cement, to increase the compressive strength or decrease the permeability of the set cement mixture. Portland cement is the preferred hydraulic cement for use with the slurries of this invention.

What is claimed is:

1. A microsilica slurry comprising an aqueous-based carrier, at least about 50% by weight of microsilica, based on the weight of said slurry, an anionic dispersant for said microsilica, and a chelating agent capable of chelating multivalent cationic impurities in said microsilica, said slurry having a pH in the range of about 5.0 to 8.5.

2. A microsilica slurry of claim 1 wherein said dispersant is selected from the group consisting of lignosulfonic acid salts, arylsulfonic acid-formaldehyde condensate polymers and salts thereof, and polymers of ethylenically polymerizable carboxylic acids and salts thereof.

3. A microsilica slurry of claim 1 wherein said dispersant is a neutralized naphthalenesulfonate-formaldehyde condensate polymer.

4. A microsilica slurry of claim 1 comprising at least about 0.005% by weight of said dispersant, based on the weight of said microsilica.

5. A microsilica slurry of claim 4 comprising greater than about 0.05% by weight of said dispersant, said pH being in the range of about 7.0 to 8.5

6. A microsilica slurry of claim 1 comprising less than about 2% by weight of said dispersant, based on the weight of said microsilica.

7. A microsilica slurry of claim 1 comprising at least about 0.01% by weight of said chelating agent, based on the weight of said microsilica.

8. A microsilica slurry of claim 7 comprising at least about 0.01% to 1.5% by weight of said chelating agent.

21

9. A microsilica slurry of claim 8 comprising about 0.01% to 0.5% by weight of said chelating agent, said pH being in the range of about 6.0 to 6.5.

10.. A microsilica slurry of claim 1 comprising at least about 0.05% by weight of said chelating agent, said pH being greater than about 6.5

11. A microsilica slurry of claim 1 comprising at least about 0.1% by weight of said chelating agent, said pH being greater than about 7.5.

12. A microsilica slurry of claim 1 comprising at least about 0.1% of said dispersant and at least about 0.1% of said chelating agent.

13. A microsilica slurry of claim 3 wherein said chelating agent is ethylenediaminetetracetic acid.

14. A microsilica slurry of claim 1 wherein said microsilica is condensed silica fume.

15. A hydraulic cement composition comprising a hydraulic cement and a microsilica slurry of claim 1.

16. A composition of claim 15 comprising from about 2% to 50% by weight of microsilica, based on the weight of said hydraulic cement.

17. A composition of claim 15 wherein said hydraulic cement comprises Portland cement.

18. A method of preparing a microsilica slurry comprising the steps of providing an aqueous medium, adding to said aqueous medium an anionic dispersant for microsilica and a chelating agent capable of chelating multivalent cationic impurities in said microsilica, adjusting the pH of said aqueous medium such that after the addition of said microsilica to said aqueous medium the pH of said aqueous medium is at least about 5.0, and adding said microsilica to said aqueous medium after pH adjustment.

19. A method of claim 18 further comprising adjusting the pH of said aqueous medium downward, after the addition of said microsilica, to within the range of about 5.0 to 8.5.

22

## EUROPEAN SEARCH REPORT

**European Patent Office**

Application number

EP 87 73 0054

### DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | GB-A-2 131 409 (ELKEM)<br><br>* Claims 1,2,7,12; page 2, lines 21-27; page 7, lines 41-45 *<br><br>- - - | 1-5,7, 8,13-17 | C 04 B 18/14<br>C 04 B 20/02<br>C 04 B 28/04<br>B 01 F 17/00 //<br>(C 04 B 28/04<br>C 04 B 18:14<br>C 04 B 24:12 |
| Y | GB-A- 743 763 (ARMSTRONG CORK CO.)<br><br>* Page 1, lines 50-54; page 2, lines 1-24 *<br><br>- - - | 1-5,7, 8,13-17 | C 04 B 24:16 )<br>(C 04 B 28/04<br>C 04 B 18:14<br>C 04 B 24:12<br>C 04 B 24:26 ) |
| A | CHEMICAL ABSTRACTS, vol. 92, no. 16, April 1980, Page 333, abstract no. 134102t, Columbus, Ohio, US; A.B. Shalinets et al.: "Study of the mechanism of the effect of chemical reagents on aluminosilicate solutions. II. Study of the mechanism of the effect of chemical reagents on cement mortars" & ZH. PRIKL. KHIM. (LENINGRAD) 1979, 52(1), 57-60<br><br>- - - - - | | **TECHNICAL FIELDS SEARCHED (Int Cl 4)**<br><br>C 04 B 18/00<br>C 04 B 20/00<br>C 04 B 24/00<br>B 01 F 3/00<br>B 01 F 17/00<br>B 01 F 13/00 |

The present search report has been drawn up for all claims

| Place of search | Date of completion of the search | Examiner |
|---|---|---|
| THE HAGUE | 20-08-1987 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82